# EUROPEAN PATENT SPECIFICATION

(11) **EP 4 383 464 B1**
(45) Date of publication and mention of the grant of the patent: **10.12.2025**
(21) Application number: 22855347.5
(22) Date of filing: 05.08.2022
(51) Int. Cl.: H01R 12/58, H01R 13/02, H01R 13/03, H01R 13/17, H01R 12/71

(54) **ELECTRICAL CONNECTION STRUCTURE, CHARGING SEAT, AND AUTOMOBILE**
ELEKTRISCHE VERBINDUNGSSTRUKTUR, LADESITZ UND KRAFTFAHRZEUG
STRUCTURE DE CONNEXION ÉLECTRIQUE, SIÈGE DE CHARGE ET AUTOMOBILE

(30) Priority: 07.08.2021 CN 202110904566
(43) Date of publication of application: 12.06.2024
(73) Proprietor: Changchun Jetty Automotive Technology Co., Ltd., Changchun, Jilin 130000 (CN)
(72) Inventor: WANG, Chao, Changchun City, Jilin 130000 (CN)
(74) Representative: Habermann, Hruschka & Schnabel
(86) International application number: PCT/CN2022/110552
(87) International publication number: WO 2023/016366

(56) References cited:
- CN-A- 103 337 728
- CN-A- 107 004 979
- CN-A- 110 574 238
- CN-A- 114 069 284
- CN-U- 206 864 645
- CN-U- 216 698 787
- US-A- 4 515 422
- US-A1- 2011 203 841
- US-A1- 2021 151 912

## Description

The present application claims priority of the Chinese patent application with the application number 202110904566.7, filed on August 07, 2021, and entitled "Electrical Connection Structure".

### TECHNICAL FIELD

The present disclosure relates to the field of new energy automobile charging, and in particular to an electrical connection structure which can be used for a circuit board.

### BACKGROUND

Since the 1990s, under the dual pressure of energy and environment, the research and development of electric automobiles has once again entered an active period. In the past 20 years, with the rapid development of various science and technologies, many technical difficulties of electric automobiles have been gradually solved. The major automakers in the world have launched their own electric automobile products one after another.

A charging pile, a charging gun and a charging socket are the main charging devices of an electric automobile, in which the charging device standard requires that all charging devices must be provided with PE wires. The PE wire is a grounding wire of the charging device, and is used for protecting equipment and people when electric leakage occurs. In the existing charging gun or charging socket, terminals of the PE wire are usually welded directly onto the circuit board. If the terminals of the PE wire are damaged during use, the terminals of the PE wire are not easy to detach during maintenance, which will increase the maintenance manhours and increase the maintenance cost. If the terminals of the PE wire are not firmly welded, the terminals of the PE wire are in poor contact with the circuit board, thereby affecting the stability of the electrical connection between the circuit board and the terminals of the PE wire. As a result, electric leakage occurs in the equipment, resulting in a risk of electric shock casualties.

Electrical connection structure, charging seat and automobile are known in the prior art, e.g. from US2021/151912A1.

Therefore, there is an urgent need for a new solution in the existing technology to solve the above problems.

### SUMMARY

The present disclosure provides an electrical connection structure to ensure the stability of signal transmission between a circuit board and a terminal.

The present disclosure provides the specific technical solution with the electrical connection structure as defined in claim 1.

Optionally, the base band is an annular structure on which the elastic sheets are distributed.

Optionally, the elastic sheets are uniformly distributed on the annular structure.

Optionally, shape of the protrusion portion is an arc structure or a bent structure.

Optionally, the bent structure has a bending angle of 90° to 160°.

Optionally, diameters of circumscribed circles of the plurality of protrusion portions are greater than an inner diameter of the plug-in hole.

In a background example not covered by the appended claims, the number of the base band is one, one end of the elastic sheet is a free end, the other end of the elastic sheet is connected to the base band, the protrusion portion is located on the free end of the elastic sheet, and the protrusion portion protrusion portion applies pressure on the surface of the circuit board through the deformation elasticity of the elastic sheet.

Optionally, the pressure is 0.5 N to 50 N.

Optionally, the protrusion portion also abuts against an inner surface of the plug-in hole.

Optionally, the protrusion portion abuts against an upper surface or a lower surface of the circuit board.

Optionally, the plurality of protrusion portions abut against both of the inner surface of the plug-in hole and the upper surface of the circuit board, respectively, or the plurality of protrusion portions abut against both of the inner surface of the plug-in hole and the lower surface of the circuit board, respectively.

Optionally, the elastic sheet abutting against the inner surface of the plug-in hole and the elastic sheet abutting against the upper surface of the circuit board are arranged at an interval, or the elastic sheet abutting against the inner surface of the plug-in hole and the elastic sheet abutting against the lower surface of the circuit board are arranged at an interval.

Optionally, a terminal support is further included, which is fixed on the circuit board and on which the plug-in terminal is fixed.

Optionally, the plug-in terminal has a first snap-in portion matched with the first base band and a second snap-in portion matched with the second base band.

Optionally, the first snap-in portion includes a first flange and a second flange arranged at an interval along an extending direction of the plug-in terminal, an upper edge of the first base band abuts against the first flange, and a lower edge of the first base band abuts against the second flange.

Optionally, the second snap-in portion includes a third flange and a fourth flange arranged at an interval along an extending direction of the plug-in terminal, an upper edge of the second base band abuts against the third flange, and a lower edge of the second base band abuts against the fourth flange.

Optionally, the number of the elastic sheets is 3 to 24.

Optionally, a tangent direction of the elastic sheet is consistent with an axis direction of the metal dome.

Optionally, the tangent direction of the elastic sheet and the axis of the metal dome form a certain angle.

Optionally, the tangent direction of the elastic sheet and the axis of the metal dome form the same angle everywhere.

Optionally, the angle between the tangent direction of the elastic sheet and the axis of the metal dome is in the range from 10° to 60°.

Optionally, the material of the metal dome contains copper or copper alloy.

Optionally, the material of the metal dome contains tellurium.

Optionally, the content of tellurium in the material of the metal dome is 0.1% to 5%.

Optionally, the material of the metal dome contains beryllium.

Optionally, the content of beryllium in the material of the metal dome is 0.05% to 5%.

Optionally, the content of beryllium in the material of the metal dome is 0.1% to 3.5%.

Optionally, a coating is provided on at least part of the surface of the plug-in terminal and the protrusion portion.

Optionally, material of the coating on at least part of the surface of the plug-in terminal is different from material of the coating on the protrusion portion.

Optionally, the material of the coating contains one or more of gold, silver, nickel, tin, zinc, tin-lead alloy, silver-antimony alloy, palladium, palladium-nickel alloy, graphite-silver, graphene-silver and silver-gold-zirconium alloy.

Optionally, the coating includes a bottom layer and a surface layer.

Optionally, the material of the bottom layer contains one or more of gold, silver, nickel, tin, tin-lead alloy and zinc; the material of the surface layer contains one or more of gold, silver, nickel, tin, tin-lead alloy, silver-antimony alloy, palladium, palladium-nickel alloy, graphite-silver, graphene-silver and silver-gold-zirconium alloy.

Optionally, thickness of the bottom layer is 0.01 µm to 15 µm.

Optionally, thickness of the bottom layer is 0.1 µm to 9 µm.

Optionally, thickness of the surface layer is 0.3 µm to 55 µm.

Optionally, thickness of the surface layer is 0.5 µm to 35 µm.

Optionally, the material of the plug-in terminal contains either copper or copper alloy or aluminum or aluminum alloy.

The present disclosure further provides a charging socket including an electrical connection structure of any of the above embodiments.

The present disclosure further provides an automobile including the charging socket and/or including an electrical connection structure of any of the above embodiments.

The present disclosure can produce the following beneficial effects:

Based on the electrical connection structure of the present disclosure, the plug-in terminal has good contact with the metal dome, the metal dome has a protrusion portion which protrudes outwards and is stably connected to the circuit board, and the plurality of elastic sheets of the metal dome provide a plurality of signal detection points, thereby ensuring stability of signal transmission; in addition, the metal dome itself has good performance, can be used for multiple times of insertion and removal of the plug-in terminal, and has a long service life.

The shape of the protrusion portion of the metal dome according to the present disclosure is an arc structure or a bent structure, which can further ensure the stability of the connection between the metal dome and the circuit board.

The diameters of circumscribed circles of the plurality of protrusion portions according to the present disclosure are greater than an inner diameter of the plug-in hole, which can ensure that the protrusion portion abuts against the upper surface or the lower surface of the circuit board stably.

In the metal dome according to the present disclosure, the number of the base band is two, one end of the elastic sheet is connected to the first base band, the other end of the elastic sheet is connected to the second base band, the protrusion portion is located between the two ends of the elastic sheet, and the protrusion portion protrusion portion applies pressure on the surface of the circuit board through the deformation elasticity of the elastic sheet. Thus, the elastic sheets are fixed by two base bands to form an integrated component, and the protrusion portion uses the elastic restoring force to exert pressure on the surface of the circuit board, which is greatly conducive to the stability of the connection between the metal dome and the circuit board.

In the metal dome according to the present disclosure, the protrusion portion can also abut against an inner surface of the plug-in hole of the circuit board. Thus, by the protrusion portion abuts against the surface of the circuit board and also abuts against the inner surface of the plug-in hole, which further enhances the stability of the connection between the metal dome and the circuit board, and further ensures the stability of signal transmission.

In the metal dome according to the present disclosure, the elastic sheet abutting against the inner surface of the plug-in hole and the elastic sheet abutting against the upper surface of the circuit board are arranged at an interval, or the elastic sheet abutting against the inner surface of the plug-in hole and the elastic sheet abutting against the lower surface of the circuit board are arranged at an interval. Since the protrusion portion is arranged at the free end of the elastic sheet, it can be understood that the elastic sheet abutting against the inner surface of the plug-in hole is not provided with a protrusion portion, and the elastic sheet abutting against the upper surface or the lower surface of the circuit board is provided with a protrusion portion. Thus, the plurality of elastic sheets on the metal dome are divided into two groups, and the two different elastic sheets are arranged at intervals, which not only ensures the stable connection between the metal dome and the circuit board, but also ensures the stable connection between the metal dome and the plug-in terminal, thereby ensuring the final electrical connection and signal connection.

The plug-in terminal according to the present disclosure may be provided with a first snap-in portion and a second snap-in portion. For an embodiment of the metal dome having two base bands, the first snap-in portion of the plug-in terminal may be snapped with the first base band, and the second snap-in portion of the plug-in terminal may be snapped with the second base band, which thus can ensure the stable connection between the metal dome and the plug-in terminal, and further ensure the signal connection between the plug-in terminal and the circuit board (electrical connection including electric energy connection and signal connection).

In the electrical connection structure according to the present disclosure, by setting the angle between the elastic sheet of the metal dome and the rotating axis of the metal dome itself, the conductive performance and the stability of the connection between the metal dome and the plug-in terminal can be further improved.

The metal dome and the plug-in terminal in the embodiment of the present disclosure adopt tellurium-copper alloy, so that the metal dome has good conductive performance and easy-machining property, thereby ensuring the electrical property and improving the processability, and the elasticity of the tellurium-copper alloy is also excellent.

A coating was adopted in the contact segment and the metal dome of the present disclosure, which can better increase anti-corrosion performance, and exemplarily a composite coating is adopted to better improve the firmness of the coating, and after multiple times of insertion and removal, it is still possible to ensure non-falling and anti-corrosion performance of the coating.

### BRIEF DESCRIPTION OF THE DRAWINGS

FIG. 1 is a structural schematic diagram of the electrical connection structure according to the first embodiment of the present application;
FIG. 2 is a structural schematic diagram of the electrical connection structure from another perspective according to the first embodiment of the present application;
FIG. 3 is a structural schematic diagram of the metal dome in the electrical connection structure according to the first embodiment;
FIG. 4 is a structural schematic diagram of the circuit board in the electrical connection structure according to the first embodiment, showing a plug-in hole;
FIG. 5 is a structural schematic diagram of the plug-in terminal in the electrical connection structure according to the first embodiment;
FIG. 6 is a structural schematic diagram of the terminal support in the electrical connection structure according to the first embodiment;
FIG. 7 is a structural schematic diagram of the metal dome in electrical connection structure according to a background example of the present application.

### DETAILED DESCRIPTION OF THE EXEMPLARY EMBODIMENTS

Hereinafter the technical solution in the embodiments of the present application will be described clearly and integrally in combination with the accompanying drawings in the embodiments of the present application, and obviously the described embodiments are merely part of the embodiments, not all of the embodiments.

Hereinafter the present disclosure is described in further detail, so that those skilled in the art can implement the disclosure with reference to the text of the specification. For a clearer understanding of the technical features, objects and effects of the present disclosure, specific embodiments of the present disclosure will now be described with reference to the accompanying drawings. The terms "first," "second," etc. are used for descriptive purpose only and are not to be construed as indicating or implying relative importance or implicitly indicating the number of the indicated technical features, whereby features defined with "first," "second," etc. may explicitly indicate or implicitly include one or more of the features. **In** description of the present disclosure, "multiple" means two or more, unless otherwise indicated. **In** the description of the present disclosure, unless otherwise stated, the term "connection" is to be understood in a broad sense, for example, it may be fixed connection, detachable connection, direct connection or indirect connection through an intermediary, and the specific meaning of the term in this patent may be understood by those ordinarily skilled in the art according to specific circumstances.

### First Embodiment

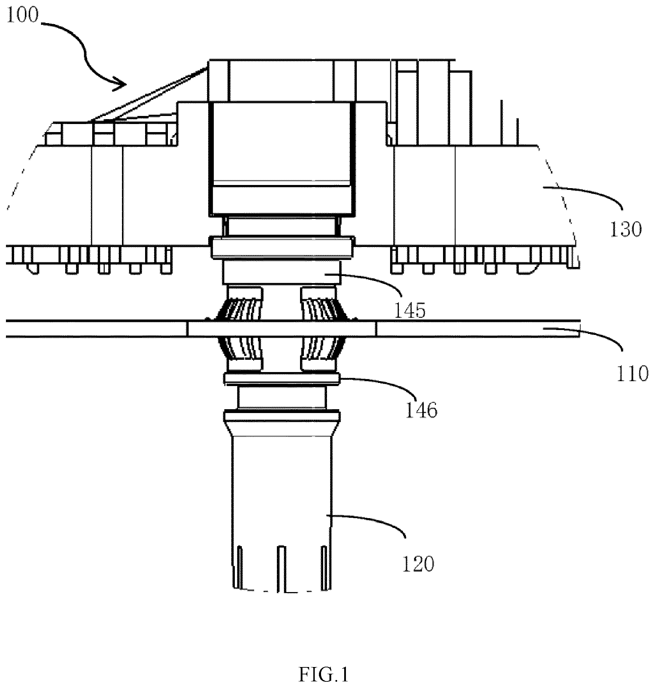

The present disclosure provides an electrical connection structure 100 applied to a circuit board 110, and the circuit board 110 is provided with a plug-in hole. As illustrated in FIG. 1, the electrical connection structure 100 includes a metal dome 140 and a plug-in terminal 120. The metal dome 140 includes a base band and a plurality of elastic sheets 143 respectively connected to the base band, the base band is wrapped around at least a portion of an outer periphery of the plug-in terminal 120, the elastic sheets 143 have a protrusion portion 144 which protrudes outwards, and the protrusion portion 144 abuts against a surface of the circuit board, and the plug-in terminal 120 is electrically connected to the circuit board 110 by means of the metal dome 140.

The plug-in terminal 120 of the present disclosure has good contact with the metal dome 140, the metal dome 140 has a protrusion portion 144 which protrudes outwards and is stably connected to the circuit board 110, and the plurality of elastic sheets 143 provide a plurality of signal detection points, thereby ensuring stability of signal transmission; in addition, the metal dome 140 itself has good performance, can be used for multiple times of insertion and removal of the plug-in terminal 120, and has a long service life. Thus the problem in the prior art can be solved that because the poor welding of pins may lead to poor contact, thereby affecting the stability of the electrical connection between the circuit board 110 and the terminal. In addition, the disclosure enhances the adaptive performance of the circuit board 110 through plug-in connection between the plug-in terminal 120 and the metal dome 140, in which insertion and removal can be performed repeatedly compared with the welding connection. The plug-in terminal 120 in this embodiment may also be understood as the connection terminal of the PE wire (grounding wire) in the charging device.

The detailed structure of each component of the electrical connection structure 100 in this embodiment is described in detail in conjunction with FIGs. 1 to 6.

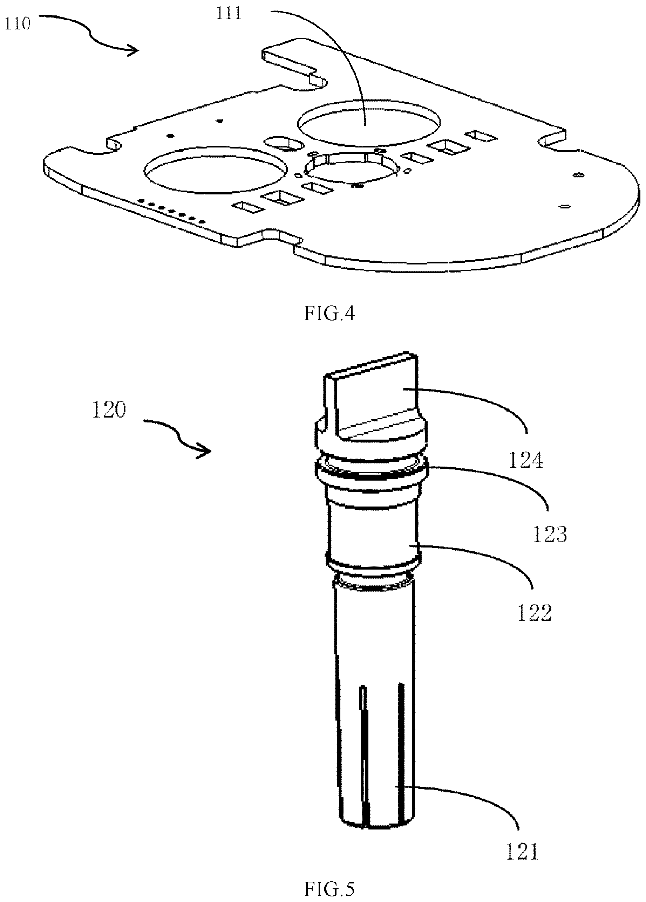

Specifically, as illustrated in FIG. 5, the plug-in terminal 120 includes a plug-in segment 121, a contact segment 122, a fixed segment 123, and a connection segment 124 connected in turn. The plug-in segment 121 is for being plugged with a matching end terminal. For example, a male terminal of the charging gun and a female terminal of the charging socket are in plug-in connection, so that the charging current can be conducted from the power supply to the automotive battery. The connection segment 124 is used for being electrically connected to the cable conductor. For example, the plug-in terminal 120 inside the charging socket is connected to the cable of the charging socket and conducts electric energy to the automotive battery. The contact segment 122 is for being in contact connection with the metal dome 140. For example, the PE terminal of the charging socket is in contact with the metal dome 140 on the circuit board to realize the function of the circuit board to read a grounding signal from the PE terminal.

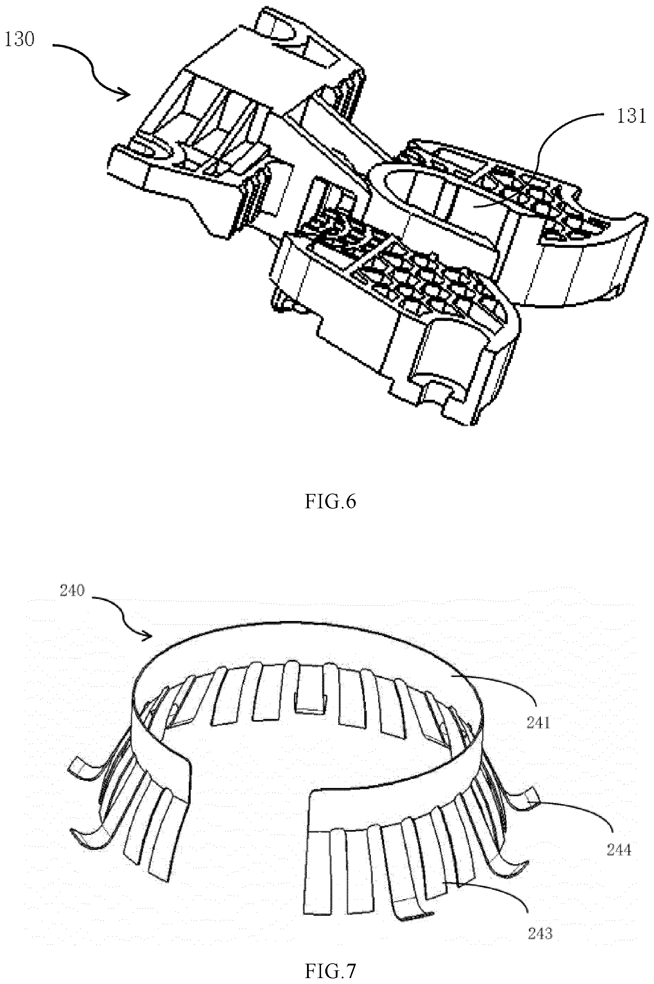

Specifically, as illustrated in FIG. 6, the electrical connection structure of the embodiment further includes a terminal support 130, which can be fixed on the circuit board 110. The fixed segment 123 of the plug-in terminal 120 is fixed on the terminal support 130. In the specific embodiment, the terminal support 130 may be fixed on the circuit board 110 by snap-in connection, bonding, and screw connection. The snap-in connection means that a plurality of clamping claws having elasticity are arranged on the terminal support 130, and a clamping slot or a clasp are arranged on the circuit board 110, and the plurality of clamping claws of the terminal support 130 are mutually clamped with the clamping slot or the clasp on the circuit board 110, so that the terminal support 130 is fixed on the circuit board 110. The bonding means that bonding surfaces are arranged on both the terminal support 130 and the circuit board 110, and then adhesive is coated on the bonding surfaces respectively to make the bonding surfaces of the two bond together. The screw connection means that threaded holes are arranged on the terminal support 130 and through holes are arranged on the circuit board 110, the screws pass through the through holes to screw and fix the circuit board 110 on the terminal support 130.

More specifically, as illustrated in FIG. 6, the terminal support may include a U-shaped clamping portion 131, and correspondingly, the fixed segment 123 of the terminal is clamped in the U-shaped clamping portion for fixing.

Specifically, as illustrated in FIGs. 1, 2 and 4, the circuit board 110 is provided with a plug-in hole 111 into which the plug-in terminal 120 is plugged. The outer diameter of the contact segment 122 of the plug-in terminal 120 is smaller than the diameter of the plug-in hole on the circuit board 110, so that the plug-in terminal 120 can be smoothly inserted into the plug-in hole 111.

Specifically, as illustrated in FIG. 7, the number of the base band 241 may be one, one end of the elastic sheet 243 is a free end, the other end of the elastic sheet 243 is connected to the base band 241, the protrusion portion 244 is located on the free end of the elastic sheet 243, and the protrusion portion 244 uses the deformation elastic force of the elastic sheet 243 to exert pressure on the surface of the circuit board 110.

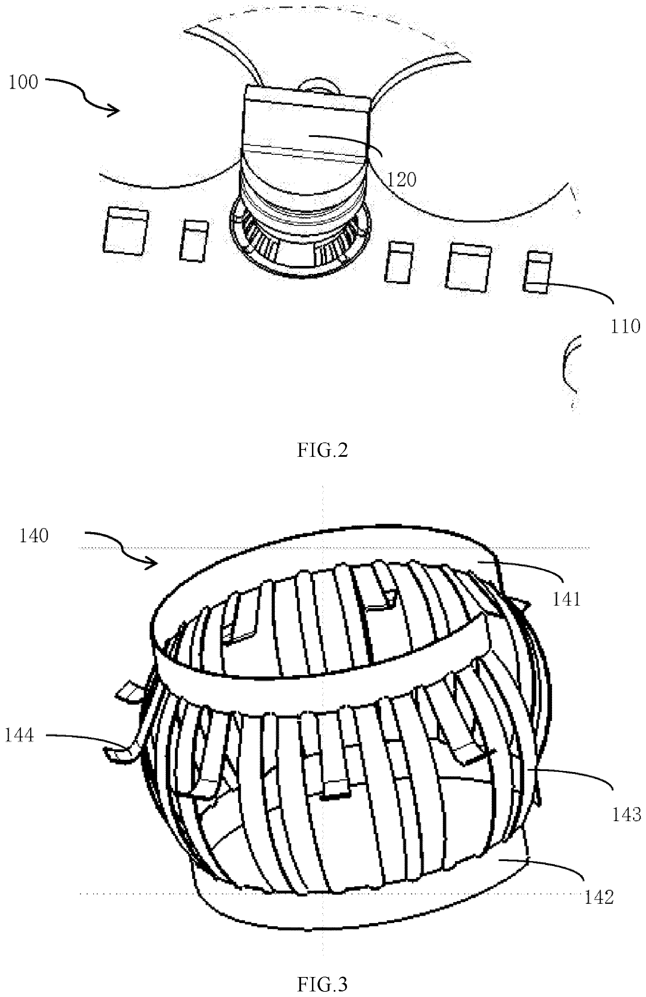

Specifically, as illustrated in FIG. 3, the metal dome 140 includes a first base band 141 and a second base band 142. The base band is an annular structure, and a plurality of elastic sheets 143 are distributed on the annular structure, and further are evenly distributed on the annular structure. As a result, the metal dome 140 applies uniform elastic force to the contact segment 122, and the rotating axis of the plug-in terminal 120 may also basically coincide with the axis of the plug-in hole 111, thus achieving a stable electrical connection. Exemplarily, the number of the elastic sheets can be 3 to 24.

Specifically, one end of the elastic sheet 243 is connected to the first base band 141, the other end of the elastic sheet 143 is connected to the second base band 142, the protrusion portion 144 is located between the two ends of the elastic sheet 143, and the protrusion portion 144 uses the deformation elastic force of the elastic sheet 143 to exert pressure on the surface of the circuit board.

More specifically, the two ends of the elastic sheet 143 are fixed and connected by the first base band 141 and the second base band 142 to form an integrated component, and the plurality of elastic sheets 143 have curved radian such that the metal dome 140 is waist-drum shaped. The outer surface of the waist-drum shaped metal dome can abut against the inner surface of the plug-in hole to realize a stable electrical connection between the metal dome and the circuit board. The protrusion portion 144 is located between the two ends of the elastic sheet 143, and is formed by separating one ends of part of the elastic sheets 143 of the plurality of elastic sheets 143 from the base band and arranging the part of the elastic sheets 143 on the separated free ends. As illustrated in FIG. 3, the length of the elastic sheets 143 provided with the protrusion portion 144 can be smaller than the length of the elastic sheets 143 not provided with the protrusion portion 144.

More exemplarily, the elastic sheets 143 provided with the protrusion portion 144 and the elastic sheets 143 not provided with the protrusion portion 144 cross with each other. As illustrated in FIG. 3, the elastic sheets 143 not provided with the protrusion portion 144 (which can be defined as ordinary elastic sheets) between the adjacent elastic sheets 143 provided with the protrusion portion 144 have the same number. For example, the number of the ordinary elastic sheets between the adjacent elastic sheets 143 provided with the protrusion portion 144 is two. In this embodiment, as illustrated in FIGs. 1 and 2, the protrusion portion 144 abuts against the upper surface of the circuit board 110. Therefore, it can also be understood that the elastic sheet 143 abutting against the inner surface of the plug-in hole (the elastic sheet not provided with the protrusion portion 144) and the elastic sheet 143 abutting against the upper surface of the circuit board 110 (the elastic sheet provided with the protrusion portion 144) are arranged at an interval.

Then, in other embodiments, the protrusion portion 144 may also abut against the lower surface of the circuit board 110. Further, the metal dome 140 may also be provided in such a manner that the elastic sheet 143 abutting against the inner surface of the plug-in hole and the elastic sheet abutting against the lower surface of the circuit board 110 are arranged at an interval.

Further, in other embodiments not illustrated, the protrusion portion may also abut against the inner surface of the plug-in hole. Thus, more specifically, the plurality of protrusion portion may abut against both of the inner surface of the plug-in hole and the upper surface of the circuit board, respectively, or the plurality of protrusion portions may abut against both of the inner surface of the plug-in hole and the lower surface of the circuit board, respectively. Thus the stability of the connection between the metal dome and the circuit board can be further enhanced.

Of course, it may also be desirable that the protrusion portion abutting against the inner surface of the plug-in hole and the protrusion portion abutting against the upper surface of the circuit board are arranged and cross at an interval; or the protrusion portion abutting against the inner surface of the plug-in hole and the protrusion portion abutting against the lower surface of the circuit board are arranged and cross at an interval.

Further, the shape of the protrusion portion 144 may be an arc structure or a bent structure. The arc structure or the bent structure can make the contact between the metal dome and the circuit board more stable. In addition, during the use of the electrical connection structure 100, the contact segment 122 may be relatively shifted from the metal dome 140 due to vibration. In a stationary state, the contact segment 122 is in plane contact with the metal dome 140, and then the metal dome 140 is also in plane contact with the circuit board 110. In the vibration environment, the metal dome 140 and the circuit board 110 may form a transient point contact because of the relative displacement, at this time the contact resistance increases instantaneously, and the conduction current may also increase suddenly, which may lead to excessive temperature rise between the metal dome 140 and the circuit board 110 to cause damage. The arc structure or the bent structure in the vibration environment may also keep the metal dome 140 be in plane contact with the circuit board 110, so that there may be no sudden increase in the conduction current resulting in damage to the electrical connection structure 100.

Specifically, the bending angle of the bent structure of the protrusion portion 144 is 90° to 160°. In order to verify the influence of the bending angle of the bent structure on the contact resistance between the metal dome and the circuit board 110, the inventor uses the metal dome 140, the plug-in terminal 120 and the circuit board 110 having the same size, which are installed at the same relative positions, but the inventor uses different bending angles of the bent structure to respectively measure the contact resistance between the metal dome 140 and the circuit board 110, and the test results are illustrated in Table 1.

The contact resistance between the metal dome 140 and the circuit board 110 is tested using a micro-ohmmeter, one end of the measuring end of the micro-ohmmeter is placed on the metal dome 140 and the other end on the electrical connection point of the circuit board 110, which are placed at the same position for each measurement, and then the contact resistance reading is read on the micro-ohmmeter. In this embodiment, the contact resistance is greater than 1 mΩ, which is considered to be unqualified.

**Table 1 Influence of different bending angles of the bent structure on the contact resistance between the contact portion 143 and the contact segment 122**

| Different bending angles of the bent structure (°) | | | | | | | | | | | |
|---|---|---|---|---|---|---|---|---|---|---|---|
| 70 | 80 | 90 | 100 | 110 | 120 | 130 | 140 | 150 | 160 | 170 | 180 |

| Contact resistance between the protrusion portion 144 and the electrical connection point of the circuit board (mΩ) | | | | | | | | | | | |
|---|---|---|---|---|---|---|---|---|---|---|---|
| 1.16 | 1.05 | 0.96 | 0.94 | 0.91 | 0.87 | 0.85 | 0.83 | 0.80 | 0.77 | cannot be inserted | cannot be inserted |

As can be seen from Table 1 above, when the bending angle of the bent structure is less than 90°, due to the small angle, the contact position of the bending mechanism is sharp, and correspondingly the contact area between the bent structure and the circuit board is small, and the contact resistance may increase, which does not meet the standard requirements. When the bending angle of the bent structure is greater than 160°, because the bending mechanism is close to a plane, the metal dome 140 may not be installed into the predetermined plug-in position of the circuit board 110, so that the function of the electrical connection structure 100 cannot be realized. Therefore, the inventor sets the bending angle of the protrusion portion to be 90° to 160°.

Exemplarily, the diameters of circumscribed circles of the plurality of protrusion portions 144 are greater than the inner diameter of the plug-in hole 111. Thus, the protrusion portion 144 can abut against the circuit board 110 more conveniently. The specific shape of the protrusion portion is not limited in the present disclosure.

Further, when the contact segment 122 of the plug-in terminal 120 is in contact connection with the metal dome 140, the plurality of elastic sheets 143 of the metal dome 140 are elastically deformed, and the elastic sheets 143 further applies pressure to the inner wall of the plug-in hole 111 and at the same time the protrusion portion 114 applies pressure to the circuit board 111, thereby realizing stable electrical connection between the plug-in terminal 120 and the metal dome 140 and the circuit board 110 through the plurality of elastic sheets 143 and the plurality of protrusion portions 144.

Further, the pressure applied by the protrusion portion 144 on the circuit board 111 can be 0.5 N to 50 N. In order to verify the influence of the pressure applied by the protrusion portion 144 on the circuit board 110 on the contact resistance between the metal dome 140 and the circuit board 110, the inventor uses the metal dome 140, the plug-in terminal 120 and the circuit board 110 having the same size, which are installed at the same relative positions, but the inventor uses different elastic forces of the elastic sheet 143 to respectively measure the contact resistance between the protrusion portion 144 and the circuit board 110, and the test results are illustrated in Table 2.

The elastic force of the elastic sheet 143 is measured by a precision tension force gauge, and after the metal dome 140 is fixed, the precision tension force gauge measures the elastic force of the elastic sheet 143 after moving by the working displacement.

The contact resistance between the protrusion portion 144 and the electrical connection point on the circuit board 110 is tested using a micro-ohmmeter, one end of the measuring end of the micro-ohmmeter is placed on the protrusion portion 144 and the other end on the electrical connection point, which are placed at the same position for each measurement, and then the contact resistance reading is read on the micro-ohmmeter. In this embodiment, the contact resistance is greater than 1 mΩ, which is considered to be unqualified.

**Table 2 Influence of different pressures on the contact resistance between the contact portion 143 and the contact segment 122**

| Pressure applied by the protrusion portion 144 on the circuit board (N) | | | | | | | | | | | |
|---|---|---|---|---|---|---|---|---|---|---|---|
| 0.1 | 0.3 | 0.5 | 1 | 3 | 5 | 10 | 20 | 30 | 40 | 50 | 60 |

| Contact resistance between the protrusion portion 144 and the electrical connection point of the circuit board (mΩ) | | | | | | | | | | | |
|---|---|---|---|---|---|---|---|---|---|---|---|
| 1.21 | 1.03 | 0.98 | 0.90 | 0.88 | 0.84 | 0.81 | 0.77 | 0.72 | 0.68 | 0.63 | cannot be inserted |

As can be seen from Table 2 above, when the pressure applied by the protrusion portion 144 on the circuit board 110 is less than 0.5 N, the contact area between the protrusion portion 144 and the circuit board 110 is small due to the small pressure, and the contact resistance may also increase, which does not meet the standard requirements. When the pressure applied by the protrusion portion 144 on the circuit board 110 is greater than 50 N, the elastic sheet 143 may hardly deform due to the excessive elastic force of the elastic sheet 143, which may cause that the elastic sheet 143 provided with the protrusion portion 144 cannot be inserted into the predetermined position of the plug-in hole 111, so that the function of the electrical connection structure 100 cannot be realized. Therefore, the inventor sets that the pressure applied by the protrusion portion 144 on the circuit board 110 is 0.5 N to 50 N.

In addition, in the present embodiment, referring to FIG. 3, the tangential direction of the elastic sheet 143 is consistent with the axis direction of the metal dome 140. The tangential direction here is defined as the direction in which the sheet part of the elastic sheet 143 extends. Although the elastic sheet 143 is bent radially outwards, the elastic sheet 143 itself extends in a direction basically consistent with the rotation axis of the base band.

It is of course understandable that, in other embodiments, the tangential direction of the elastic sheet 143 and the axis of the metal dome 140 may form a certain angle. From the perspective of FIG. 3, the elastic sheet 143 is tilted to the left or the right. Exemplarily, the angle between the tangent direction of the elastic sheet 143 and the axis of the metal dome 140 is in the range from 10° to 60°. Exemplarily, the tangent direction of the elastic sheet 143 and the axis of the metal dome 140 form the same angle everywhere. It can be understood that the elastic sheet 143 always extends in the same direction.

Next, the matching relationship between the plug-in terminal 120 and the metal dome 140 is explained. In the present embodiment, the contact portion of the plug-in terminal 120 is provided with a first snap-in portion 145 and a second snap-in portion 146 arranged at an interval. In the present embodiment, the first snap-in portion145 and the second snap-in portion 146 are annular ribs, and the outermost diameters of the first snap-in portion 145 and the second snap-in portion 146 are greater than the diameters of the first base band 141 and the second base band 142. Since the metal dome 140 is elastic, after the plug-in terminal 120 is plugged in pace into the metal dome 140, the first annular rib is clamped on the first base band 141 of the metal dome 140, and the second base band 142 is clamped on the second annular rib to achieve a stable electrical connection between the plug-in terminal 120 and the metal dome 140.

Further, of course, in the embodiments not illustrated, the plug-in terminal may have a first flange and a second flange arranged at an interval along the extending direction of the plug-in terminal, and the first flange and the second flange form the first snap-in portion. The outermost diameters of the first flange and the second flange are greater than the diameter of the first base band. After the plug-in terminal and the metal dome are assembled in place, the upper edge of the first base band abuts against the first flange, and the lower edge of the first base band abuts against the second flange. It is understood that both ends of the first base band are subjected to the clamping force.

Similarly, the second snap-in portion may include a third flange and a fourth flange arranged at an interval along the extending direction of the plug-in terminal, and the third flange and the fourth flange form the second snap-in portion. The outermost diameters of the third flange and the fourth flange are greater than the diameter of the second base band. After the plug-in terminal and the metal dome are assembled in place, the upper edge of the second base band abuts against the third flange, and the lower edge of the second base band abuts against the fourth flange. It is understood that both ends of the second base band are subjected to the clamping force.

Thus, the electrical connection between the plug-in terminal and the metal dome is more stable.

In some embodiments, the material of the metal dome 140 is copper or copper alloy, and the copper conductor material has good conductive performance, good ductility and excellent elasticity, and is exemplary as a conductor material.

Further, the material of the metal dome 140 contains tellurium. The material of the metal dome 140 is tellurium-copper alloy, so that the terminal has good conductive performance and free-machining property, thereby ensuring the electrical property and improving the processability, and the elasticity of the tellurium-copper alloy is also excellent. Exemplarily, the content of tellurium in the material of the metal dome 140 is 0.1% to 5%.

The inventor uses ten metal domes 140 having the same shape for testing, and each metal dome 140 is made of a tellurium-copper alloy, in which the content of tellurium takes 0.05%, 0.1%, 0.2%, 1%, 1.2%, 1.8%, 3%, 5%, 6%, 7%, respectively. The test contents are about the metal dome 140 and the resistance, and the test results are illustrated in Table 3.

The elastic force of the elastic sheet 143 is measured by a precision tension force gauge, and after the metal dome 140 is fixed, the precision tension force gauge measures the elastic force of the elastic sheet after moving by the working displacement. In this embodiment, the elastic force less than 20 N is considered to be unqualified.

The resistance of the metal dome 140 is tested using a micro-ohmmeter, the measuring ends of the micro-ohmmeter are placed on the two ends of the metal dome 140, which are placed at the same position for each measurement, and then the resistance reading is read on the micro-ohmmeter. In this embodiment, the resistance is greater than 1 mΩ, which is considered to be unqualified.

**Table 3 Influence of different content proportions of tellurium on elastic force and resistance of the metal dome 140**

| Content proportions of tellurium in the metal dome 140 | | | | | | | | | |
|---|---|---|---|---|---|---|---|---|---|
| 0.05% | 0.1% | 0.2% | 1% | 1.2% | 1.8% | 3% | 5% | 6% | 7% |

| Elastic force of the elastic sheet 143 (N) | | | | | | | | | |
|---|---|---|---|---|---|---|---|---|---|
| 18 | 21 | 28 | 32 | 36 | 40 | 45 | 49 | 54 | 59 |

| Resistance of the metal dome 140 (mΩ) | | | | | | | | | |
|---|---|---|---|---|---|---|---|---|---|
| 0.62 | 0.67 | 0.73 | 0.78 | 0.84 | 0.89 | 0.94 | 0.97 | 1.03 | 1.16 |

As can be seen from Table 3 above, when the content proportion of tellurium in the material of the metal dome 140 is less than 0.1%, because the material is close to pure copper and relatively soft, the elastic force of the elastic sheet 143 does not meet the required value. When the content proportion of tellurium in the metal dome 140 is greater than 5%, because the conductivity of the tellurium-copper alloy is worse than that of pure copper material, the resistance value of the metal dome 140 does not meet the requirements. Therefore, the content of tellurium in the material of the metal dome 140 is 0.1% to 5%.

Further, the material of the metal dome 140 contains beryllium. The material of the metal dome 140 is beryllium-copper alloy, so that the terminal has a very high hardness, limit of elasticity, fatigue limit and wear resistance, but also has good corrosion resistance, thermal conductivity and electrical conductivity, and does not produce sparks when being impacted. Exemplarily, the content of beryllium in the material of the metal dome 140 is 0.05% to 5%. The limit of the content of beryllium in the metal dome 140 is obtained by the inventor after many tests.

When the content proportion of beryllium in the material of the metal dome 140 is less than 0.05%, because the material is close to pure copper, it is easy to produce sparks when being impacted. When the content proportion of beryllium in the metal dome 140 is greater than 5%, because the conductivity of the beryllium-copper alloy is worse than that of pure copper material, the resistance value of the metal dome 140 does not meet the requirements. Therefore, the content of beryllium in the material of the metal dome 140 is 0.05% to 5%. More exemplarily, the content of beryllium in the material of the metal dome 140 is 0.1% to 3.5%.

In order to verify influence of the content proportion of beryllium in the material of the metal dome 140 on the resistance and ignition of the metal dome 140, the inventor uses ten metal domes 140 having the same shape for testing, and each metal dome 140 is made of a beryllium-copper alloy, in which the content of beryllium takes 0.03%, 0.05%, 0.1%, 0.2%, 1%, 1.2%, 1.8%, 3%, 5%, 6%, respectively. The test contents are about the resistance and ignition of the metal dome 140, and the test results are illustrated in Table 4.

The resistance of the metal dome 140 is tested using a micro-ohmmeter, the measuring ends of the micro-ohmmeter are placed on the two ends of the metal dome 140, which are placed at the same position for each measurement, and then the resistance reading is read on the micro-ohmmeter. In this embodiment, the resistance is greater than 1 mΩ, which is considered to be unqualified.

Ignition of the metal dome 140 refers to that, a charged plug-in terminal 120 collides with the metal dome 140, to simulate the working state of the plug-in terminal 120 and the metal dome 140, and observe the number of times that ignition occurs after 1000 collisions, and if the number of times of ignition is more than 3 times, it is considered unqualified.

**Table 4 Influence of different content proportions of beryllium on the resistance and ignition of the metal dome 140**

| Content proportions of beryllium in the metal dome 140 | | | | | | | | | | |
|---|---|---|---|---|---|---|---|---|---|---|
| 0.03% | 0.05% | 0.1% | 0.2% | 1% | 1.2% | 1.8% | 3% | 3.5% | 5% | 6% |

| Ignition of the metal dome 140 (number of times) | | | | | | | | | | |
|---|---|---|---|---|---|---|---|---|---|---|
| 5 | 2 | 1 | 0 | 0 | 0 | 0 | 0 | 0 | 0 | 0 |

| Resistance of the metal dome 140 (mΩ) | | | | | | | | | | |
|---|---|---|---|---|---|---|---|---|---|---|
| 0.61 | 0.68 | 0.74 | 0.79 | 0.85 | 0.87 | 0.92 | 0.94 | 0.99 | 1.07 | 1.19 |

As can be seen from Table 4 above, when the content proportion of beryllium in the material of the metal dome 140 is less than 0.05%, because the material is close to pure copper, when the plug-in terminal 120 collides with the metal dome 140, the number of times that ignition occurs is more than 3. When the content proportion of beryllium in the metal dome 140 is greater than 5%, because the conductivity of the beryllium-copper alloy is worse than that of pure copper material, the resistance value of the metal dome 140 does not meet the requirements. Therefore, the content of beryllium in the material of the metal dome 140 is 0.05% to 5%. Exemplarily, since the content of beryllium in the material of the metal dome 140 is 0.1% to 3.5%, the resistance and ignition of the metal dome 140 are in a better range, therefore, the inventor sets the content of beryllium in the material of the metal dome 140 is exemplarily 0.1% to 3.5%.

From the above description of the material of the metal dome 140, it can be understood that the material of the plug-in terminal 120 can also have the same structure as the material of the metal dome 140. In some embodiments, the material of the plug-in terminal may contain copper or copper alloy or aluminum or aluminum alloy. For the sake of simplicity, the same contents are repeated here.

It can be understood that in some embodiments, the material of the plug-in terminal 120 is copper or copper alloy or aluminum or aluminum alloy.

In some embodiments, a coating is provided on at least part of the surface of the plug-in terminal and the protrusion portion. Specifically, coatings are provided on the contact segment 122 of the plug-in terminal 120 and the metal dome 140. Exemplarily, the material of the coating on the contact segment 122 of the plug-in terminal 120 is different from the material of the coating on the protrusion portion 144 of the metal dome 140.

The coating is to improve corrosion resistance, improve the conductive performance, increase the number of times of plug-in connection, and better extend the service life of the plug-in terminal 120 and the metal dome 140.

The coating can be made by electroplating, chemical plating, magnetron sputtering or vacuum plating or the like. The coatings of the metal dome 140 and the plug-in terminal 120 may have the same thickness, or can be set to have different thicknesses as required.

Electroplating method refers to a process of plating a thin layer of other metals or alloys on some metal surface using the principle of electrolysis.

Chemical plating refers to a process of deposition of metals generated by controllable oxidation-reduction reaction under the catalysis of metals.

Magnetron sputtering refers to that, using the interaction of magnetic and electric fields, the electrons travel in a spiral pattern near the surface of the target, thus increasing the probability that the electrons will hit the argon and produce ions. The generated ions will hit the target surface under the action of electric field and sputter out the target material.

Vacuum plating refers to that, under vacuum conditions, various metal and non-metal films are deposited on the surface of the moulding parts by means of distillation or sputtering or the like.

The material of the coating may contain one or more of gold, silver, nickel, tin, zinc, tin-lead alloy, silver-antimony alloy, palladium, palladium-nickel alloy, graphite-silver, graphene-silver and silver-gold-zirconium alloy, and the coating material is the existing material. Copper is a reactive metal, thus an oxidation reaction may occur between copper and oxygen and water during use, therefore, one or more inactive metals are needed as a coating to prolong the service life of the metal dome 140 and the plug-in terminal 120. In addition, for a metal contact that needs to be inserted and removed frequently, a better wear-resistant metal is needed to serve as the coating, which can greatly prolong the service life of the contact. In addition, the contact needs excellent conductive property, and the electric conductivity and stability of the metals mentioned above are better than that of copper or copper alloys, which can make the metal dome 140 and the plug-in terminal 120 obtain better electrical property and longer service life.

In order to demonstrate the influence of different coating materials on the overall performance of the metal dome 140 and the plug-in terminal 120, the inventor adopts the same specification and material, uses samples of the metal dome 140 and the plug-in terminal 120 with different coating materials, and performs a series of tests of corrosion resistance time, and the experimental results are illustrated in Table 5 below.

The test of corrosion resistance time in the Table 5 below refers to, putting the metal dome 140 and the plug-in terminal 120 into a salt fog spraying test chamber to spray salt fog to each position of the metal dome 140 and the plug-in terminal 120 and then taking the metal dome 140 and the plug-in terminal 120 out every 20 hours to clean and observe surface corrosion of the metal dome 140 and the plug-in terminal 120, at that time a cycle ends, and when the corrosion area of the surface of the metal dome 140 and the plug-in terminal 120 is greater than 10% of the total area, stopping the test and recording the number of cycles at that time. In this embodiment, the number of cycles less than 80 is considered as being unqualified.

**Table 5 Influence of different coating materials on corrosion resistance of the metal dome 140 and the plug-in terminal 120**

| Different coating materials | | | | | | | | | | | |
|---|---|---|---|---|---|---|---|---|---|---|---|
| Gold | Silver | Silver-antimony Alloy | Graphite -silver | Graphe ne-silver | Silver-gold-zirconium Alloy | Tin | Nickel | Palla dium | Palladiu m-nickel Alloy | Tin-lead Alloy | Zinc |
| Number of Periods of Corrosion Resistance Test (times) | | | | | | | | | | | |
| 131 | 126 | 126 | 132 | 128 | 133 | 87 | 89 | 110 | 117 | 111 | 85 |

As can be seen from Table 5 above, when the material of the selected coating contains gold, silver, silver-antimony alloy, palladium, palladium-nickel alloy, graphite-silver, graphene-silver and silver-gold-zirconium alloy, the experimental results highly exceed the standard values, and the performance is relatively stable. When the material of the selected coating contains nickel, tin, tin-lead alloy and zinc, the experimental results can also meet the requirements. Therefore, the inventor selects the material of the coating to contain combination of one or more of gold, silver, nickel, tin, zinc, tin-lead alloy, silver-antimony alloy, palladium, palladium-nickel alloy, graphite-silver, graphene-silver and silver-gold-zirconium alloy.

Further, the coating may include a bottom layer and a surface layer. In some embodiments, the coating is made by a multilayer plating method, in which after the plug-in terminal 120 and the metal dome 140 are machined, there are actually still many gaps and holes on the surface at the microscopic interface, and these gaps and holes are the biggest cause of wear and corrosion of the metal dome 140 and the plug-in terminal 120 during use. Therefore, it is necessary to plate a bottom layer on the surface of the metal dome 140 and the plug-in terminal 120 to fill the gaps and holes on the surface to make the surface to be flat and have no holes, and then to plate a surface coating on the surface of the metal dome 140 and the plug-in terminal 120 to cause them to be bonded more firmly and more smoothly. There are no gaps and holes on the coating surface, so that the metal dome 140 and the plug-in terminal 120 have better wear resistance, corrosion resistance and electrical performance, thereby greatly extending the service life of the metal dome 140 and the plug-in terminal 120.

The material of the bottom layer may contain one or more of gold, silver, nickel, tin, tin-lead alloy and zinc; the material of the surface layer may contain one or more of gold, silver, nickel, tin, tin-lead alloy, silver-antimony alloy, palladium, palladium-nickel alloy, graphite-silver, graphene-silver and silver-gold-zirconium alloy. The bottom material is the existing material, and the surface material is also the existing material.

In a specific embodiment, thickness of the bottom layer is 0.01 µm to 15 µm. Exemplarily, thickness of the bottom layer is 0.1 µm to 9 µm.

In a specific embodiment, thickness of the surface layer is 0.3 µm to 55 µm. Exemplarily, thickness of the surface layer is 0.5 µm to 35 µm.

In order to demonstrate the influence of change of the thickness of the bottom layer of the coating on the overall performance of the metal dome 140 and the plug-in terminal 120, the inventor adopts the same specifications and materials, uses samples of the metal dome 140 and the plug-in terminal 120 with different nickel plating bottom thicknesses and the same silver plating surface thickness, and performs a series of temperature rise and corrosion resistance time tests by using the plug-in end terminals 120 of the same specification, and the experimental results are illustrated in Table 6 below.

The temperature rise tests in Table 6 below is to energize the same current to the metal dome 140 and the plug-in terminal 120 after they are in contact, to detect the temperature at the same position of the metal dome 140 and the plug-in terminal 120 before being powered on and after temperature stabilization in a closed environment, to take a difference and obtain an absolute value. In this embodiment, a temperature rise greater than 50K is considered to be unqualified.

The test of corrosion resistance time in the Table 6 below refers to, putting the metal dome 140 and the plug-in terminal 120 into a salt fog spraying test chamber to spray salt fog to each position of the metal dome 140 and the plug-in terminal 120 and then taking the metal dome 140 and the plug-in terminal 120 out every 20 hours to clean and observe surface corrosion of the metal dome 140 and the plug-in terminal 120, at that time a cycle ends, and when the corrosion area of the surface of the metal dome 140 and the plug-in terminal 120 is greater than 10% of the total area, stopping the test and recording the number of cycles at that time. In this embodiment, the number of cycles less than 80 is considered as being unqualified.

**Table 6 Influence of different thicknesses of the bottom layer of the coating on temperature rise and corrosion resistance of the metal dome 140 and the plug-in terminal 120**

| Different nickel plating thicknesses of the bottom layer (µm) | | | | | | | | | | | | | | | |
|---|---|---|---|---|---|---|---|---|---|---|---|---|---|---|---|
| 0.001 | 0.005 | 0.01 | 0.05 | 0.1 | 0.5 | 1 | 3 | 5 | 6 | 9 | 11 | 13 | 15 | 17 | 19 |

| Plug-in Connector Assembly Temperature Rise (k) | | | | | | | | | | | | | | | |
|---|---|---|---|---|---|---|---|---|---|---|---|---|---|---|---|
| 10.7 | 12.3 | 14.9 | 16.5 | 18.2 | 21.9 | 24.5 | 26.7 | 28.5 | 31.3 | 35.9 | 40.5 | 43.6 | 47.8 | 58.1 | 67.4 |

| Number of Periods of Corrosion Resistance Test (times) | | | | | | | | | | | | | | | |
|---|---|---|---|---|---|---|---|---|---|---|---|---|---|---|---|
| 67 | 78 | 82 | 93 | 106 | 109 | 113 | 117 | 112 | 124 | 128 | 129 | 131 | 130 | 129 | 127 |

As can be seen from Table 6 above, when the nickel plating thicknesses of the bottom layer is smaller than 0.01 µm, the temperature rise of the the metal dome 140 and the plug-in terminal 120 is qualified, however, because the coating is too thin, the number of corrosion resistance cycles of the the metal dome 140 and the plug-in terminal 120 is smaller than 80, which does not meet the performance requirement of the metal dome 140 and the plug-in terminal 120. This thus has a great impact on both of the overall performance and service life of the electrical connection structure 100, and may cause the service life of the product to decrease sharply or even failure of the product and combustion accidents in a serious situation. When the nickel plating thicknesses of the bottom layer is greater than 15 µm, because the bottom layer of the coating is thick, heat generated by the metal dome 140 and the plug-in terminal 120 cannot be dissipated, so that the temperature rise of the metal dome 140 and the plug-in terminal 120 is not qualified, and the thick coating is easy to fall off the surface of the metal dome 140 and the plug-in terminal 120, resulting in a decrease in the number of cycles of corrosion resistance. Therefore, the inventor selects the thicknesses of the bottom layer of the coating to be 0.01 µm to 15 µm. Exemplarily, the inventor finds that when the thickness of the bottom layer of the coating is 0.1 µm to 9 µm, the combined effect of the temperature rise and corrosion resistance of the metal dome 140 and the plug-in terminal 120 is better. Therefore, in order to further improve the safety, reliability and practicality of the product itself, the thickness of the bottom layer of the coating is exemplarily 0.1 µm to 9 µm.

In order to demonstrate the influence of change of the thickness of the surface layer of the coating on the overall performance of the plug-in terminal, the inventor adopts the same specifications and materials, uses samples of the metal dome 140 and the plug-in terminal 120 with the same nickel plating bottom thickness and different silver plating surface thicknesses, and performs a series of temperature rise and corrosion resistance time tests by using the plug-in end terminals 120 of the same specification, and the experimental results are illustrated in Table 7 below.

**Table 7 Influence of different thicknesses of the surface layer of the coating on temperature rise and corrosion resistance of the metal dome 140 and the plug-in terminal 120**

| Different silver plating thicknesses of the surface layer (µm) | | | | | | | | | | | | | | | | | | | |
|---|---|---|---|---|---|---|---|---|---|---|---|---|---|---|---|---|---|---|---|
| 0.1 | 0.3 | 0.5 | 1 | 1.5 | 5 | 10 | 15 | 20 | 25 | 30 | 35 | 40 | 45 | 50 | | 55 | | 60 | 65 |

| Plug-in Connector Assembly Temperature Rise (k) | | | | | | | | | | | | | | | | | | | |
|---|---|---|---|---|---|---|---|---|---|---|---|---|---|---|---|---|---|---|---|
| 11.4 | 13.3 | 14.4 | 15.3 | 17.5 | 21.8 | 23.9 | 25.4 | 28.6 | 31.8 | 35.4 | 38.9 | 42.6 | 45.3 | 48.4 | 49.5 | | 53.8 | | 69.5 |

| Number of Periods of Corrosion Resistance Test (times) | | | | | | | | | | | | | | | | | | | |
|---|---|---|---|---|---|---|---|---|---|---|---|---|---|---|---|---|---|---|---|
| 75 | 80 | 85 | 92 | 93 | 95 | 98 | 98 | 103 | 105 | 109 | 114 | 117 | 119 | 122 | 125 | | 123 | | 121 |

As can be seen from Table 7 above, when the silver plating thickness of the surface layer is smaller than 0.3 µm, the temperature rise of the the metal dome 140 and the plug-in terminal 120 is qualified, however, because the coating is too thin, the number of corrosion resistance cycles of the the metal dome 140 and the plug-in terminal 120 is smaller than 80, which does not meet the performance requirement of the metal dome 140 and the plug-in terminal 120. This thus has a great impact on both of the overall performance and service life of the electrical connection structure 100, and may cause the service life of the product to decrease sharply or even failure of the product and combustion accidents in a serious situation. When the silver plating thickness of the surface layer is greater than 55 µm, because the bottom layer of the coating is thick, heat generated by the metal dome 140 and the plug-in terminal 120 cannot be dissipated, so that the temperature rise of the metal dome 140 and the plug-in terminal 120 is not qualified, and the thick coating is easy to fall off the surface of the terminal, resulting in a decrease in the number of cycles of corrosion resistance. Moreover, because the metal of the surface layer of the coating is expensive, the performance may not be improved if a thick coating is used, thus there is no use value. Therefore, the inventor selects the silver plating thickness of the surface layer to be 0.3 µm to 55 µm.

Exemplarily, the inventor finds that when the thickness of the surface layer of the coating is 0.5 µm to 35 µm, the combined effect of the temperature rise and corrosion resistance of the metal dome 140 and the plug-in terminal 120 is better. Therefore, in order to further improve the safety, reliability and practicality of the product itself, the thickness of the surface layer of the coating is exemplarily 0.5 µm to 35 µm.

In a specific embodiment, the material of the plug-in terminal 120 contains either copper or copper alloy or aluminum or aluminum alloy. Due to the high voltage and high current, the plug-in terminal 120 of electric automobile needs to conduct the current by using the plug-in terminal 120 with a large cross-sectional area. The copper material has good conductive performance and good ductility, and is the exemplary material for the plug-in terminal 120. However, with the increasing price of copper, the material cost of using copper as the material of the plug-in terminal 120 will become higher and higher. To this end, people begin to look for alternatives to the metallic copper to reduce costs. The content of metallic aluminium in the earth's crust is about 7.73%, after the refining technology is optimized, the price of the metallic aluminium is relatively low, and compared with copper, aluminum is light in weight and is second only to copper in conductivity, and aluminum can replace some copper in the field of electrical connection. Therefore, it is a developing trend to replace copper with aluminum in the field of automotive electrical connection.

Based on the electrical connection structure 100 of the embodiment, the plug-in terminal 120 has good contact with the metal dome 140, the metal dome 140 is stably connected to the circuit board 110, and the plurality of elastic sheets 143 provide a plurality of signal detection points, thereby ensuring stability of signal transmission; in addition, the metal dome 140 itself has good performance, can be used for multiple times of insertion and removal of the plug-in terminal 120, and has a long service life.

### Background example

The electrical connection structure according to the background example is described below with reference to FIG. 7. Except for the metal dome 240, the plug-in terminal and circuit board terminal support have the same structure and construction as that are described in the first embodiment. Therefore, elements that have substantially the same function as those in the first embodiment have the same reference numerals here. For the sake of brevity, other components with the same structure/construction are not described and/or illustrated in detail here.

As illustrated in FIG. 7, the metal dome 240 includes a first base band 241 and a plurality of elastic sheets 243. One end of the elastic sheet 243 is a free end, the other end of the elastic sheet 243 is connected to the first base band 241, the protrusion portion 244 is located on the free end of the elastic sheet 243, and the protrusion portion 244 uses the deformation elastic force of the elastic sheet 243 to exert pressure on the surface of the circuit board 110. Thus, on the basis of meeting the stable connection, the manufacturing cost of the metal dome can be saved.

Based on the electrical connection structure of the present disclosure, the plug-in terminal has good contact with the metal dome, the metal dome has a protrusion portion which protrudes outwards and is stably connected to the circuit board, and the plurality of elastic sheets of the metal dome provide a plurality of signal detection points, thereby ensuring stability of signal transmission; in addition, the metal dome itself has good performance, can be used for multiple times of insertion and removal of the plug-in terminal, and has a long service life.

The present disclosure further provides a charging socket which may include an electrical connection structure of any of the above embodiments. The electrical connection structure 100 of the disclosure includes the plug-in terminal 120 that has good contact with the metal dome 140, the metal dome 140 is stably connected to the circuit board 110, and the plurality of elastic sheets 143 provide a plurality of signal detection points, thereby ensuring stability of signal transmission; in addition, the metal dome 140 itself has good performance, can be used for multiple times of insertion and removal of the plug-in terminal 120, and has a long service life.

### Additional Embodiment

The present disclosure further provides an automobile which may include the charging socket described above and/or an electrical connection structure of any of the above embodiments. In the existing charging socket, the plug-in terminal 120 is usually welded directly onto the circuit board 110. If the plug-in terminal 120 is damaged during use, the plug-in terminal 120 are not easy to detach during maintenance, which will increase the maintenance time and increase the maintenance cost. If the plug-in terminal 120 is not securely welded, the plug-in terminal 120 is in poor contact with the circuit board 110, thereby affecting the stability of the electrical connection between the circuit board 110 and the plug-in terminal 120. As a result, electric leakage occurs in the equipment, resulting in a risk of electric shock casualties. The automobile provided by the present disclosure adopts the charging socket described above and/or the electrical connection structure of any of the above embodiments. The circuit board 110 is in contact connection to the plug-in terminal 120 by the metal dome 140. The plug-in terminal 120 can be removed from the circuit board 110 at any time, thereby saving maintenance hours and reducing maintenance costs. In addition, the elastic force of the metal dome 140 is stable, and the contact resistance between the metal dome 140 and the plug-in terminal 120 is always stable. In the motion state of the automobile and in continuous vibration state of the plug-in terminal 120, the metal dome 140 can also maintain a stable electrical connection with the plug-in terminal 120 to ensure the safety of the automobile and extend the service life of the automobile.

Unless otherwise defined, the technical and scientific terms used herein have the same meanings as that are generally understood by those skilled in the art belonging to the technical field of the present disclosure. The terms used herein are for purposes of describing specific embodiments only and are not intended to limit the disclosure. The terms such as "components" and the like presented herein can mean either a single component or combination of a plurality of components. The terms such as "install", "arrange" and the like presented herein can mean either that one component is attached directly to another component, or that one component is attached to another component via a middleware. A feature described in one embodiment herein may be applied, alone or in combination with other features, to another embodiment unless the feature is not applicable in that other embodiment or is otherwise stated.

The disclosure has been described by the above embodiments, but it should be understood that the above embodiments are for giving examples and illustration purposes only and are not intended to limit the disclosure within the scope of the described embodiments. It is understood by those skilled in the art that further variations and modifications may be made according to the teachings of the present disclosure, and that these variations and modifications fall within the scope of the appended claims.

## Claims

1. An electrical connection structure (100) to be applied to a circuit board (110), the circuit board (110) being provided with a plug-in hole (111), the electrical connection structure (100) comprises:
a metal dome (140) and a plug-in terminal (120);
wherein the metal dome (140) comprises a base band (141, 142) and a plurality of elastic sheets (143) respectively connected to the base band (141, 142), the base band(141, 142) is wrapped around at least a portion of an outer periphery of the plug-in terminal(120), the elastic sheets have a protrusion portion (144) which protrudes outwards, and the protrusion portion (144) is adapted to abut against a surface of the circuit board (110), and the plug-in terminal (120) is electrically connected to the circuit board (110) by means of the metal dome (140), and the protrusion portion (144) applies pressure on the surface of the circuit board (110) through the deformation elasticity of the elastic sheet (143);
wherein the number of the base band (141, 142) is two, comprising a first base band (141) and a second base band (142), **characterized in that**
the plurality of elastic sheets (143) on the metal dome (140) are divided into two groups, and the two different elastic sheets are arranged at intervals,
in one group of the elastic sheets (143), one end of the (143) of each elastic sheet (143) is a free end, and the other end of each elastic sheet (143) is connected to the first base band (141), and the protrusion portion (144) is located on the free end of each elastic sheet (143);
in the other group of the elastic sheets (143), one end of each elastic sheet (143) is connected to the first base band (141), and the other end of each elastic sheet (143) is connected to the second base band(142), and the protrusion portion is located between the two ends of the elastic sheet.

2. The electrical connection structure (100) according to claim 1, wherein the base band (141, 142) is an annular structure on which the elastic sheets (143) are distributed.

3. The electrical connection structure (100) according to claim 2, wherein the elastic sheets (143) are uniformly distributed on the annular structure.

4. The electrical connection structure (100) according to claim 1, wherein shape of the protrusion portion (144) is an arc structure or a bent structure;
the bent structure has a bending angle of 90° to 160°; or
diameters of circumscribed circles of the plurality of protrusion portions (144) are greater than an inner diameter of the plug-in hole (111).

5. The electrical connection structure (100) according to claim 1, wherein the pressure is 0.5 N to 50 N.

6. The electrical connection structure (100) according to claim 1, wherein the protrusion portion (144) also abuts against an inner surface of the plug-in hole (111); or
the protrusion portion (144) abuts against an upper surface or a lower surface of the circuit board (110).

7. The electrical connection structure (100) according to claim 6, wherein the plurality of protrusion portions (144) simultaneously abut against both of the inner surface of the plug-in hole (111) and the upper surface of the circuit board (110), respectively, or the plurality of protrusion portions (144) simultaneously abut against both of the inner surface of the plug-in hole (111) and the lower surface of the circuit board (110), respectively.

8. The electrical connection structure (100) according to claim 1, wherein the elastic sheets (143) abutting against the inner surface of the plug-in hole (111) and the elastic sheets (143) abutting against the upper surface of the circuit board (110) are arranged at an interval, or the elastic sheets (143) abutting against the inner surface of the plug-in hole (111) and the elastic sheets (143) abutting against the lower surface of the circuit board (110) are arranged at an interval.

9. The electrical connection structure (100) according to claim 1, wherein further comprising a terminal support (130), which is fixed on the circuit board (110) and on which the plug-in terminal (120) is fixed.

10. The electrical connection structure (100) according to claim 1, wherein the plug-in terminal (120) has a first snap-in portion matched with the first base band (141) and a second snap-in portion matched with the second base band (142);
the first snap-in portion comprises a first flange and a second flange arranged at an interval along an extending direction of the plug-in terminal (120), an upper edge of the first base band(141) abuts against the first flange, and a lower edge of the first base band (141) abuts against the second flange; or
the second snap-in portion comprises a third flange and a fourth flange arranged at an interval along an extending direction of the plug-in terminal (120), an upper edge of the second base band (142) abuts against the third flange, and a lower edge of the second base band (142) abuts against the fourth flange.

11. The electrical connection structure (100) according to claim 1, wherein the number of the elastic sheets (143) is 3 to 24; or
a tangent direction of the elastic sheets (143) is consistent with an axis direction of the metal dome (140); or
the tangent direction of the elastic sheets (143) and the axis of the metal dome (140) form a certain angle; or
the tangent direction of the elastic sheets (143) and the axis of the metal dome (140) form the same angle everywhere; or
the angle between the tangent direction of the elastic sheets (143) and the axis of the metal dome (140) is in the range from 10° to 60°; or
the material of the metal dome (140) contains copper or copper alloy;
the material of the metal dome (140) contains tellurium;
the content of tellurium in the material of the metal dome (140) is 0.1% to 5%; or
the material of the metal dome (140) contains beryllium;
the content of beryllium in the material of the metal dome (140) is 0.05% to 5%; or
the content of beryllium in the material of the metal dome (140) is 0.1% to 3.5%; or
a coating is provided on at least part of the surface of the plug-in terminal (120) and the protrusion portion (144);
material of the coating on at least part of the surface of the plug-in terminal (120) is different from material of the coating on the protrusion portion (144); or
the material of the coating contains one or more of gold, silver, nickel, tin, zinc, tin-lead alloy, silver-antimony alloy, palladium, palladium-nickel alloy, graphite-silver, graphene-silver and silver-gold-zirconium alloy; or
the coating comprises a bottom layer and a surface layer;
the material of the bottom layer contains one or more of gold, silver, nickel, tin, tin-lead alloy and zinc; the material of the surface layer contains one or more of gold, silver, nickel, tin, tin-lead alloy, silver-antimony alloy, palladium, palladium-nickel alloy, graphite-silver, graphene-silver and silver-gold-zirconium alloy; or
thickness of the bottom layer is 0.01 µm to 15 µm; or
thickness of the bottom layer is 0.1 µm to 9 µm; or
thickness of the surface layer is 0.3 µm to 55 µm; or
thickness of the surface layer is 0.5 µm to 35 µm; or
the material of the plug-in terminal (120) contains either copper or copper alloy or aluminum or aluminum alloy.

12. A charging socket, comprising an electrical connection structure (100) according to any of claims 1 to 11.

13. An automobile, comprising a charging socket according to claim 12 and/or comprising an electrical connection structure (100) according to any of claims 1 to 11.

## Patentansprüche

1. Elektrische Verbindungsstruktur (100) zur Anbringung an einer Leiterplatte (110), wobei die Leiterplatte (110) mit einem Steckloch (111) versehen ist, wobei die elektrische Verbindungsstruktur (100) aufweist:
eine Metallkuppel (140) und einen Steckanschluss (120);
wobei die Metallkuppel (140) ein Basisband (141, 142) und eine Vielzahl von elastischen Folien (143) aufweist, die jeweils mit dem Basisband (141, 142) verbunden sind, wobei das Basisband (141, 142) um mindestens einen Teil eines Außenumfangs des Steckanschlusses (120) gewickelt ist, die elastischen Folien einen nach außen vorstehenden Vorsprungsabschnitt (144) aufweisen, und der Vorsprungsabschnitt (144) so ausgelegt ist, dass er an einer Oberfläche der Leiterplatte (110) anliegt, und der Steckanschluss (120) mittels der Metallkuppel (140) elektrisch mit der Leiterplatte (110) verbunden ist, und der Vorsprungsabschnitt (144) durch die Verformungselastizität der elastischen Folie (143) Druck auf die Oberfläche der Leiterplatte (110) ausübt;
wobei die Anzahl der Basisbänder (141, 142) zwei beträgt, bestehend aus einem ersten Basisband (141) und einem zweiten Basisband (142),
**dadurch gekennzeichnet, dass**
die mehreren elastischen Folien (143) auf der Metallkuppel (140) in zwei Gruppen unterteilt sind und die beiden unterschiedlichen elastischen Folien in Abständen angeordnet sind,
wobei in einer Gruppe der elastischen Folien (143) ein Ende jeder elastischen Folie (143) ein freies Ende ist und das andere Ende jeder elastischen Folie (143) mit dem ersten Basisband (141) verbunden ist und sich der Vorsprungsabschnitt (144) am freien Ende jeder elastischen Folie (143) befindet;
wobei in der anderen Gruppe der elastischen Folien (143) ein Ende jeder elastischen Folie (143) mit dem ersten Basisband (141) verbunden ist, und das andere Ende jeder elastischen Folie (143) mit dem zweiten Basisband (142) verbunden ist, und der Vorsprungsabschnitt sich zwischen den beiden Enden der elastischen Folie befindet.

2. Elektrische Verbindungsstruktur (100) nach Anspruch 1, bei der das Basisband (141, 142) eine ringförmige Struktur ist, auf der die elastischen Folien (143) verteilt sind.

3. Elektrische Verbindungsstruktur (100) nach Anspruch 2, bei der die elastischen Folien (143) gleichmäßig auf der ringförmigen Struktur verteilt sind.

4. Elektrische Verbindungsstruktur (100) nach Anspruch 1, bei der die Form des Vorsprungsabschnitts (144) eine Bogenstruktur oder eine gebogene Struktur ist;
die gebogene Struktur einen Biegewinkel von 90° bis 160° aufweist; oder
die Durchmesser der umschreibenden Kreise der mehreren Vorsprungsabschnitte (144) größer sind als der Innendurchmesser des Stecklochs (111).

5. Elektrische Verbindungsstruktur (100) nach Anspruch 1, bei der der Druck 0,5 N bis 50 N beträgt.

6. Elektrische Verbindungsstruktur (100) nach Anspruch 1, bei der der Vorsprungsabschnitt (144) auch an einer Innenfläche des Stecklochs (111) anliegt; oder
der Vorsprungsabschnitt (144) an einer Oberseite oder einer Unterseite der Leiterplatte (110) anliegt.

7. Elektrische Verbindungsstruktur (100) nach Anspruch 6, bei der die mehreren Vorsprungsabschnitte (144) gleichzeitig sowohl an der Innenfläche des Stecklochs (111) als auch an der Oberseite der Leiterplatte (110) anliegen oder die mehreren Vorsprungsabschnitte (144) gleichzeitig sowohl an der Innenfläche des Stecklochs (111) als auch an der Unterseite der Leiterplatte (110) anliegen.

8. Elektrische Verbindungsstruktur (100) nach Anspruch 1, bei der die an der Innenfläche des Stecklochs (111) anliegenden elastischen Folien (143) und die an der Oberseite der Leiterplatte (110) anliegenden elastischen Folien (143) in einem Abstand voneinander angeordnet sind, oder die an der Innenfläche des Stecklochs (111) anliegenden elastischen Folien (143) und die elastischen Folien (143), die an der Unterseite der Leiterplatte (110) anliegen, in einem Abstand angeordnet sind.

9. Elektrische Verbindungsstruktur (100) nach Anspruch 1, bei der diese des Weiteren einen Anschlusshalter (130) aufweist, der auf der Leiterplatte (110) befestigt ist und auf dem der Steckanschluss (120) befestigt ist.

10. Elektrische Verbindungsstruktur (100) nach Anspruch 1, bei der der Steckanschluss (120) einen ersten Einrastabschnitt, der mit dem ersten Basisband (141) übereinstimmt, und einen zweiten Einrastabschnitt, der mit dem zweiten Basisband (142) übereinstimmt, aufweist;
der erste Einrastabschnitt einen ersten Flansch und einen zweiten Flansch aufweist, die in einem Abstand entlang einer Ausdehnungsrichtung des Steckanschlusses (120) angeordnet sind, wobei eine Oberkante des ersten Basisbandes (141) an dem ersten Flansch anliegt und eine Unterkante des ersten Basisbandes (141) an dem zweiten Flansch anliegt; oder
der zweite Einrastabschnitt einen dritten Flansch und einen vierten Flansch aufweist, die in einem Abstand entlang einer Ausdehnungsrichtung des Steckanschlusses (120) angeordnet sind, wobei eine Oberkante des zweiten Basisbandes (142) an dem dritten Flansch anliegt und eine Unterkante des zweiten Basisbandes (142) an dem vierten Flansch anliegt.

11. Elektrische Verbindungsstruktur (100) nach Anspruch 1, bei der die Anzahl der elastischen Folien (143) 3 bis 24 beträgt; oder
eine Tangentialrichtung der elastischen Folien (143) mit einer Achsenrichtung der Metallkuppel (140) übereinstimmt; oder
die Tangentialrichtung der elastischen Folien (143) und die Achse der Metallkuppel (140) einen bestimmten Winkel bilden; oder
die Tangentialrichtung der elastischen Folien (143) und die Achse der Metallkuppel (140) überall denselben Winkel bilden; oder
der Winkel zwischen der Tangentialrichtung der elastischen Folien (143) und der Achse der Metallkuppel (140) im Bereich von 10° bis 60° liegt; oder
das Material der Metallkuppel (140) Kupfer oder eine Kupferlegierung enthält;
das Material der Metallkuppel (140) Tellur enthält;
der Tellurgehalt im Material der Metallkuppel (140) 0,1 % bis 5 % beträgt; oder
das Material der Metallkuppel (140) Beryllium enthält;
der Gehalt an Beryllium im Material der Metallkuppel (140) 0,05 % bis 5 % beträgt; oder
der Berylliumgehalt im Material der Metallkuppel (140) 0,1 % bis 3,5 % beträgt; oder
auf mindestens einem Teil der Oberfläche des Steckanschlusses (120) und des Vorsprungsabschnitts (144) eine Beschichtung vorgesehen ist;
das Material der Beschichtung auf mindestens einem Teil der Oberfläche des Steckanschlusses (120) sich von dem Material der Beschichtung auf dem Vorsprungsabschnitt (144) unterscheidet; oder
das Material der Beschichtung eines oder mehrere der folgenden Elemente enthält: Gold, Silber, Nickel, Zinn, Zink, Zinn-Blei-Legierung, Silber-Antimon-Legierung, Palladium, Palladium-Nickel-Legierung, Graphit-Silber, Graphen-Silber und Silber-Gold-Zirkonium-Legierung; oder
die Beschichtung eine Unterschicht und eine Oberflächenschicht aufweist;
das Material der Unterschicht eines oder mehrere der folgenden Elemente enthält: Gold, Silber, Nickel, Zinn, Zinn-Blei-Legierung und Zink; das Material der Oberflächenschicht eines oder mehrere der folgenden Elemente enthält: Gold, Silber, Nickel, Zinn, Zinn-Blei-Legierung, Silber-Antimon-Legierung, Palladium, Palladium-Nickel-Legierung, Graphit-Silber, Graphen-Silber und Silber-Gold-Zirkonium-Legierung; oder
die Dicke der Unterschicht 0,01 µm bis 15 µm beträgt; oder
die Dicke der Unterschicht 0,1 µm bis 9 µm beträgt; oder
die Dicke der Oberflächenschicht 0,3 µm bis 55 µm beträgt; oder
die Dicke der Oberflächenschicht 0,5 µm bis 35 µm beträgt; oder
das Material des Steckanschlusses (120) entweder Kupfer oder eine Kupferlegierung oder Aluminium oder eine Aluminiumlegierung enthält.

12. Ladebuchse, aufweisend eine elektrische Verbindungsstruktur (100) gemäß einem der Ansprüche 1 bis 11.

13. Kraftfahrzeug, aufweisend eine Ladebuchse gemäß Anspruch 12 und/oder aufweisend eine elektrische Verbindungsstruktur (100) gemäß einem der Ansprüche 1 bis 11.

## Revendications

1. Structure de connexion électrique (100) destinée à être montée sur une carte de circuit imprimé (110), la carte de circuit imprimé (110) étant pourvue d'un trou de connexion (111), la structure de connexion électrique (100) comprenant:
un dôme métallique (140) et un connecteur enfichable (120);
le dôme métallique (140) comprenant une bande de base (141, 142) et une pluralité de feuilles élastiques (143) reliées chacune à la bande de base (141, 142), la bande de base (141, 142) étant enroulée autour d'au moins une partie d'une périphérie extérieure du connecteur enfichable (120), les feuilles élastiques comportant une partie en saillie (144) faisant saillie vers l'extérieur, et la partie en saillie (144) étant conçue pour s'appuyer contre une surface de la carte de circuit imprimé (110), et le connecteur enfichable (120) est relié électriquement à la carte de circuit imprimé (110) au moyen du dôme métallique (140), et la partie en saillie (144) exerce une pression sur la surface de la carte de circuit imprimé (110) grâce à l'élasticité de déformation de la feuille élastique (143);
le nombre de bandes de base (141, 142) étant de deux, comprenant une première bande de base (141) et une deuxième bande de base (142),
**caractérisé en ce que**
la pluralité de feuilles élastiques (143) sont divisés en deux groupes sur le dôme métallique (140) et les deux feuilles élastiques différents sont disposés à intervalles réguliers,
dans un groupe de feuilles élastiques (143), une extrémité de chaque feuille élastique (143) étant une extrémité libre et l'autre extrémité de chaque feuille élastique (143) étant reliée à la première bande de base (141), et la partie en saillie (144) étant située à l'extrémité libre de chaque feuille élastique (143);
dans l'autre groupe de feuilles élastiques (143), une extrémité de chaque feuille élastique (143) étant reliée à la première bande de base (141) et l'autre extrémité de chaque feuille élastique (143) étant reliée à la deuxième bande de base (142), et la partie en saillie étant située entre les deux extrémités de la feuille élastique.

2. Structure de connexion électrique (100) selon la revendication 1, dans laquelle la bande de base (141, 142) est une structure annulaire sur laquelle les feuilles élastiques (143) sont réparties.

3. Structure de connexion électrique (100) selon la revendication 2, dans laquelle les feuilles élastiques (143) sont réparties uniformément sur la structure annulaire.

4. Structure de connexion électrique (100) selon la revendication 1, dans laquelle la forme de la partie en saillie (144) est une structure arquée ou une structure courbée;
la structure courbée présente un angle de courbure de 90° à 160°; ou
les diamètres des cercles circonscrits des multiples parties en saillie (144) sont supérieurs au diamètre intérieur du trou de connexion (111).

5. Structure de connexion électrique (100) selon la revendication 1, dans laquelle la pression est comprise entre 0,5 N et 50 N.

6. Structure de connexion électrique (100) selon la revendication 1, dans laquelle la partie en saillie (144) repose également contre une surface intérieure du trou de connexion (111); ou
la partie en saillie (144) repose contre une face supérieure ou une face inférieure de la carte de circuit imprimé (110).

7. Structure de connexion électrique (100) selon la revendication 6, dans laquelle les multiples parties en saillie (144) sont en contact simultanément à la fois avec la surface intérieure du trou de connexion (111) et avec la face supérieure de la carte de circuit imprimé (110), ou les multiples parties en saillie (144) sont en contact simultanément à la fois avec la surface intérieure du trou de connexion (111) et avec la face inférieure de la carte de circuit imprimé (110).

8. Structure de connexion électrique (100) selon la revendication 1, dans laquelle les feuilles élastiques (143) adjacentes à la surface intérieure du trou de connexion (111) et les feuilles élastiques (143) adjacentes à la surface supérieure de la carte de circuit imprimé (110) sont disposées à distance les unes des autres, ou les feuilles élastiques (143) adjacentes à la surface intérieure du trou de connexion (111) et les feuilles élastiques (143) adjacentes à la face inférieure de la carte de circuit imprimé (110) sont disposées à distance.

9. Structure de connexion électrique (100) selon la revendication 1, dans laquelle celle-ci comprend en outre un support de connexion (130) qui est fixé sur la carte de circuit imprimé (110) et sur lequel est fixé le connecteur enfichable (120).

10. Structure de connexion électrique (100) selon la revendication 1, dans laquelle le connecteur enfichable (120) comprend une première partie d'encliquetage qui correspond à la première bande de base (141) et une deuxième partie d'encliquetage qui correspond à la deuxième bande de base (142) ;
la première partie d'encliquetage comprend une première bride et une deuxième bride qui sont disposées à distance l'une de l'autre dans le sens de l'extension du connecteur enfichable (120), un bord supérieur de la première bande de base (141) reposant contre la première bride et un bord inférieur de la première bande de base (141) reposant contre la deuxième bride; ou
la deuxième partie d'encliquetage comprend une troisième bride et une quatrième bride qui sont disposées à distance l'une de l'autre dans le sens de l'extension du connecteur enfichable (120), un bord supérieur de la deuxième bande de base (142) reposant contre la troisième bride et un bord inférieur de la deuxième bande de base (142) reposant contre la quatrième bride.

11. Structure de connexion électrique (100) selon la revendication 1, dans laquelle le nombre de feuilles élastiques (143) est compris entre 3 et 24; ou
une direction tangentielle des feuilles élastiques (143) coïncide avec une direction axiale du dôme métallique (140) ; ou
la direction tangentielle des feuilles élastiques (143) et l'axe du dôme métallique (140) forment un angle déterminé; ou
la direction tangentielle des feuilles élastiques (143) et l'axe du dôme métallique (140) forment partout le même angle; ou
l'angle entre la direction tangentielle des feuilles élastiques (143) et l'axe du dôme métallique (140) est compris entre 10° et 60°; ou
le matériau du dôme métallique (140) contient du cuivre ou un alliage de cuivre;
le matériau du dôme métallique (140) contient du tellure;
la teneur en tellure dans le matériau du dôme métallique (140) est comprise entre 0,1 % et 5 %; ou
le matériau du dôme métallique (140) contient du béryllium;
la teneur en béryllium du matériau du dôme métallique (140) est comprise entre 0,05 % et 5 %; ou
la teneur en béryllium dans le matériau du dôme métallique (140) est comprise entre 0,1 % et 3,5 %; ou
un revêtement est prévu sur au moins une partie de la surface du connecteur enfichable (120) et de la partie en saillie (144);
le matériau du revêtement sur au moins une partie de la surface du connecteur enfichable (120) est différent du matériau du revêtement sur la partie en saillie (144); ou
le matériau du revêtement contient un ou plusieurs des éléments suivants : or, argent, nickel, étain, zinc, alliage étain-plomb, alliage argent-antimoine, palladium, alliage palladium-nickel, graphite-argent, graphène-argent et alliage argent-or-zirconium; ou
le revêtement comprend une sous-couche et une couche de surface;
le matériau de la sous-couche contient un ou plusieurs des éléments suivants: or, argent, nickel, étain, alliage étain-plomb et zinc ; le matériau de la couche superficielle contient un ou plusieurs des éléments suivants: or, argent, nickel, étain, alliage étain-plomb, alliage argent-antimoine, palladium, alliage palladium-nickel, graphite-argent, graphène-argent et alliage argent-or-zirconium ; ou
l'épaisseur de la sous-couche est comprise entre 0,01 µm et 15 µm; ou
l'épaisseur de la sous-couche est comprise entre 0,1 µm et 9 µm; ou
l'épaisseur de la couche superficielle est comprise entre 0,3 µm et 55 µm; ou
l'épaisseur de la couche superficielle est comprise entre 0,5 µm et 35 pm; ou
le matériau du connecteur enfichable (120) comprend soit du cuivre, soit un alliage de cuivre, soit de l'aluminium, soit un alliage d'aluminium.

12. Siège de charge comprenant une structure de connexion électrique (100) selon l'une des revendications 1 à 11.

13. Véhicule automobile comprenant un siège de charge selon la revendication 12 et/ou comprenant une structure de connexion électrique (100) selon l'une des revendications 1 à 11.
